# EUROPEAN PATENT SPECIFICATION

(11) **EP 4 208 433 B1**
(45) Date of publication and mention of the grant of the patent: **15.10.2025**
(21) Application number: 21766003.4
(22) Date of filing: 30.08.2021
(51) Int. Cl.: C05C 9/00, C05G 5/30, C08L 67/00, C09D 167/02

(54) **COATED FERTILIZER GRANULES**
UMHÜLLTE DÜNGEMITTELGRANULATE
GRANULES D'ENGRAIS ENROBÉS

(30) Priority: 01.09.2020 US 202063073056 P
(43) Date of publication of application: 12.07.2023
(73) Proprietor: Sabic Agri-Nutrients Company, 31961 Jubail (SA)
(72) Inventor: HAIGH, James, Sugar Land, Texas 77478 (US); KANNAN, Ganesh, Sugar Land, Texas 77478 (US)
(74) Representative: J A Kemp LLP
(86) International application number: PCT/IB2021/057915
(87) International publication number: WO 2022/049476

(56) References cited:
- WO-A1-2016/099919
- US-A- 5 883 199
- US-A1- 2020 262 766

## Description

### BACKGROUND OF THE INVENTION

### A. Field of the Invention

The invention generally concerns polymer coated fertilizer compositions. In particular, the invention concerns coated fertilizer granules containing a core containing a plant fertilizer and a coat containing poly butylene succinate adipate (PBSA), a second polymer selected from poly lactic acid (PLA), poly butylene succinate (PBS), or a combination of PLA and PBS, and optionally wax.

### B. Description of Related Art

Soil nutrients, such as nitrogen, phosphorus, potassium, calcium and sulfur, as well as trace elements such as iron, zinc, copper, and magnesium, are useful for achieving thriving agriculture and growth of plants. Upon repeated planting cycles, the quantity of these nutrients in the soil may be depleted, resulting in inhibited plant growth and decreased production. To counter this effect, fertilizers have been developed to help replace the depleted vital nutrients and to create the right balance of nutrients.

Certain fertilizers can degrade quickly in soil and a portion of the fertilizer can become unusable for its desired purpose. Additional problems such as excess dust formation can also occur from application of certain forms of fertilizers to soil. As a solution, polymer coated fertilizer compositions have been used for controlled or slow release of nutrients to the soil. However these polymer coated fertilizer compositions can create additional environmental problems since the polymers that are currently used are not biodegradable or are not fully biodegradable under ambient conditions. For example U.S. Pat. No. 4,369,055 describes fertilizer compositions with polyolefin coating, however such polyolefin coating are not biodegradable. Attempts to make fertilizer compositions containing biodegradable polymers have been made. For example, U.S. Pat. App. No. 20200029557 teaches polymer coated agrichemical composition, where a Lewis acid is used in the composition to enhance degradation of the polymer coating. However long term use of such compositions and Lewis acids, can result in accumulation of certain metal/metal ions in soil, can negatively affect or alter chemistry of the soil, and can create additional problems.

WO 2016/099919 A1 discusses delayed released zeolite-based agricultural compositions which may be coated with a polymer material. US 2020/0262766 A1 discusses fertilizer granules coated with polymer domains and wax domains.

### SUMMARY OF THE INVENTION

A solution to at least some of the problems discussed above has been discovered. In some aspects, the solution resides in providing a coated fertilizer granule containing a core containing a plant nutrient and a coat containing particular amounts of PBSA, a second polymer selected from poly lactic acid (PLA) and/or poly butylene succinate (PBS), and optionally wax. The coat forms a coating on an outer surface of the core. It was found that using particular amounts of PBSA and the second polymer in the coat can provide for a controlled release fertilizer composition where the polymers in the coating layer can degrade fully or at least more than 90 % by weight into carbon dioxide and water within two years in soil under ambient conditions. The polymer coating in the fertilizer granule of the present invention can satisfy OK Biodegradable SOIL certification criteria. It was found that using a higher content of PBSA and lower content of the second polymer than the particular amounts used in the present invention can lead to the polymer coating degrading very quickly and failing to provide for a controlled release composition. It was also found that using a lower content of PBSA and higher content of the second polymer than the particular amounts used in the present invention can provide for a polymer coating that does not degrade sufficiently under ambient conditions and fails to satisfy OK Biodegradable SOIL certification criteria.

The present invention is directed to a fertilizer granule. The fertilizer granule contains a core and a coat, the coat forming a coating on an outer surface of the core. The core contains a plant nutrient. The coat contains a poly butylene succinate adipate (PBSA), a second polymer, and optionally wax. The second polymer is poly lactic acid (PLA), poly butylene succinate (PBS), or a combination of PLA and PBS. Combination of PLA and PBS includes blend of PLA and PBS. In the fertilizer granule of the present invention, the coat contains 55 wt. % to 90 wt. % of the PBSA, 10 wt. % to 45 wt. % of the second polymer, and 0 wt. % to 30 wt. % of the wax, based on the total weight of the coat. In some particular aspects the coat can contain 65 wt. % to 90 wt. % of the PBSA, 10 wt. % to 35 wt. % of the second polymer, based on the total weight of the coat. In some particular aspects, the coat can contain 65 wt. % to 90 wt. % of PBSA and 10 wt. % to 35 wt. % of PLA, based on the total weight of the coat. In some particular aspects, the coat can contain 65 wt. % to 90 wt. % of PBSA and 10 wt. % to 35 wt. % of PBS, based on the total weight of the coat. In some particular aspects, the coat can contain 0.5 wt. % to 30 wt. % of the wax, based on the total weight of the coat. In some particular aspects, the coat can contain 0 wt. % to 25 wt. % of the wax, based on the total weight of the coat. In some particular aspects, the coat can contain 0.5 wt. % to 25 wt. % of the wax, based on the total weight of the coat. In some particular aspects, the coat can contain 10 wt. % to 34.5 wt. % of the second polymer, 65 wt. % to 89.5 wt. % of the PBSA, and 0.5 wt. % to 25 wt. % of the wax. In some particular aspects, the coat can contain 10 wt. % to 30 wt. % of the second polymer, 70 wt. % to 90 wt. % of the PBSA, and 0 wt. % to 10 wt. % of the wax.

The PBSA and the second polymer can be contained in one or more polymer coating layers and the wax can be contained in a wax coating layer, wherein the one or more polymer coating layers are at least partially positioned between the core and the wax coating layer. In some aspects, the wax coating layer can form an outer coating layer of the fertilizer granule. The one or more polymer coating layers can independently contain PBSA and/or the second polymer, e.g., the one or more polymer coating layers can independently contain PBSA; PLA; PBS; PBSA and PLA; PBSA and PBS; PLA and PBS; or PBSA, PLA, and PBS. In some aspects, the core can be coated with a first polymer coating layer and at least a second polymer coating layer, wherein the first polymer coating layer and the second polymer coating layer are different, and can independently contain PBSA and/or the second polymer. The coat can contain the polymers, e.g., PBSA, PLA, and/or PBS at any suitable order, and the polymers e.g., PBSA, PLA, and/or PBS can be in one or more than one coating layers. The wt. % of a polymer, e.g., PBSA, PLA, and/or PBS in a polymer coating layer can be the same and/or vary between the different layers. The wax can be alpha-olefin wax, paraffin wax, or natural wax, or any combinations thereof. In some aspects, the coat can have a thickness of 10 µm to 100 µm over the core. The thickness of the coating layers, e.g., the one or more polymer coating layers and/or the wax coating layer, can be the same or different and can vary independently. The thickness of the one or more polymer coating layers can vary independently.

The plant nutrient of the core can contain nitrogen (N), phosphorus (P), or potassium (K) containing fertilizer, or any combination thereof. In some particular aspects, the plant nutrient can contain urea. In some aspects, the plant nutrient can further contain a micronutrient and/or a secondary nutrient. The micronutrient and/or the secondary nutrient can be calcium (Ca), sulfur (S), zinc (Zn), magnesium (Mg), manganese (Mn), boron (B), iron (Fe), copper (Cu), molybdenium (Mo), or any combinations thereof.

The core can optionally include a urease inhibitor and/or a nitrification inhibitor. In some aspects, the urease inhibitor can be a thiophosphoric triamide derivative, such as N-(n-butyl) thiophosphoric triamide (NBPT). In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST), or any combination thereof, preferably DCD.

The core contains a plant nutrient and the core components mentioned herein, e.g., optional urease inhibitor and/or a nitrification inhibitor at any concentration, ratio, percent by weight, percent by volume, etc.

The core can be of any suitable shape. Shapes can include spherical, cuboidal, cylindrical, puck shape, oval, and oblong shapes, although cores having other shapes can also be made. In some aspects, the core can be spherical. In some aspects, the core can be of cylindrical shape with a circular, elliptical, ovular, triangular, square, rectangular, pentagonal, or hexagonal cross section, although cylindrical shaped core having a cross-section of other shapes can also be made. In some aspects, the core can have a dimension such as length, width, height and/or cross-sectional diameter between 0.5 mm to 5 mm, preferably 2 mm to 4 mm.

In some aspects, the fertilizer granule can contain or exclude additional ingredients. The additional ingredients included or excluded can be a preservative, insecticide, fungicide, fragrance, micronutrient, fertilizer, plant growth agent, nutrient, secondary nutrient, trace element, plant protection agent, filler, colorant, etc., or a combination thereof. In some aspects, the fertilizer granule and/or the core is essentially free of i) a binder such as plaster of paris, flour, chalk powder, bleached wheat flour, starch, gluten, kaolin, bentonite, and/or colloidal silica, ii) a filler such as silica, dried distillers grains with solubles (DDGS), MgO, CaO, bone mill powder, chalk powder, rice husk, and/or iii) a pH buffer such as CaCO₃, Na₂CO₃, K₂CO₃, MgO, KH₂PO₄, NaHCO₃, and/or MgCO₃. In some particular aspects, the fertilizer granule consist of, or consist essentially of, a core containing a nitrogen containing fertilizer such as urea, and a coat containing PBSA, the second polymer, and optionally wax. In some particular aspects, the one or more polymer coating layers consist of or consist essentially of PBSA and the second polymer. In some aspects, the coat and/or the one or more polymer coating layers can contain less than 0.05 wt. % or can be free of or essentially free of Lewis acids such as each of metal oxides, metal alkoxides, and metal C₈ to C₂₀ aliphatic acid salts, titanium dioxide, titanium chloride, aluminum isopropoxide, aluminum halide, and tin dioxide.

In some aspects, the coat can cover at least 10 %, 20 %, 30 %, 40 %, or 10 % to 50 % of the outer surface of the core. In other aspects, the coat can cover a majority (e.g., greater than 50 %) of the outer surface of the core. In some aspects, the coat can cover greater than 50 %, at least 60 %, at least 70 %, at least 80 %, at least 90 %, or 100 % of the outer surface of the core. In certain aspects, the coat can cover 60 % to 100 %, or 80 % to 100 %, or 90 % to 100 % of the outer surface of the core.

In some aspects, the core can be a prill or can be a granulated, pelletized, compacted, and/or agglomerated core. 85 wt. % to 98 wt. % of the fertilizer granule can be comprised of the core and 2 wt. % to 15 wt. % of the fertilizer granule can be comprised of the coat.

The fertilizer granule can be included in a fertilizer blend or a compounded fertilizer. The fertilizer blend or the compounded fertilizer in addition to the fertilizer granules can contain a second fertilizer granule. The second fertilizer granules can contain urea, monoammonium phosphate (MAP), diammonium phosphate (DAP), muriate of potash (MOP), monopotassium phosphate (MKP), triple super phosphate (TSP), rock phosphate, single super phosphate (SSP), or a combination thereof, and the like.

The coat and/or the one or more polymer coating layers of the coat can be degraded at least 90%, or at least 95 %, or at least 99%, or at least 99.9 % by weight, or fully within two years in soil under ambient conditions into carbon dioxide and water, as measured using ASTM D5988-96.

A method of making a fertilizer granule such as a fertilizer granule is disclosed herein. The method can include providing and/or forming a core containing a plant nutrient, coating the core with one or more solutions containing independently PBSA and/or the second polymer, e.g., PBSA; PLA; PBS; PBSA and PLA; PBSA and PBS; PLA and PBS; or PBSA, PLA, and PBS, to form a polymer coated core, wherein the polymer coated core contains the core coated with PBSA and the second polymer; and optionally coating the polymer coated core with wax. The polymer coated core can contain the one or more polymer coating layers. The coat can be coated with the solutions containing PBSA, PLA, and/or PBS at any suitable order to form the polymer coated core. The wt. % of a polymer, e.g., PBSA, PLA, and/or PBS in a polymer solution can be the same and/or vary between the different polymer solutions. The one or more solutions can independently contain organic solvent(s). The one or more solutions can independently contain organic solvent(s) including chlorinated organic solvents such as methylene chloride, chloroform, etc.; aromatics solvents such as toluene, xylene, etc.; acetonitrile; or any combination thereof.

The core can be formed as a prill or by pelletizing, compacting, and/or granulating a composition containing the plant nutrient and optionally include the urease inhibitor and/or the nitrification inhibitor.

A method of fertilizing is described herein, the method comprising applying the fertilizer granule and/or a fertilizer blend containing the fertilizer granule to at least a portion of a soil, a crop, or the soil and the crop. Also described is a method of enhancing plant growth comprising applying to soil, the plant, or the soil and the plant an effective amount of a composition comprising a fertilizer blend of the present invention.

The coating composition contains 55 wt. % to 90 wt. % of a PBSA, 10 wt. % to 45 wt. % of a second polymer, and 0 wt. % to 30 wt. % of a wax. The second polymer is poly lactic acid (PLA), poly butylene succinate (PBS), or a combination of PLA and PBS. Combination of PLA and PBS includes a blend of PLA and PBS. In some particular aspects, the coating composition can contain 65 wt. % to 90 wt. % of PBSA and 10 wt. % to 35 wt. % of the second polymer. In some particular aspects, the coating composition can contain 65 wt. % to 90 wt. % of PBSA and 10 wt. % to 35 wt. % of PLA. In some particular aspects, the coating composition can contain 65 wt. % to 90 wt. % of PBSA and 10 wt. % to 35 wt. % of PBS. In some particular aspects, the coating composition can contain 0.5 wt. % to 30 wt. % of the wax. In some particular aspects, the coating composition can contain 0 wt. % to 25 wt. % of the wax. In some particular aspects, the coating composition can contain 0.5 wt. % to 25 wt. % of the wax. In some particular aspects, the coating composition can contain 65 wt. % to 89.5 wt. % of PBSA, 10 wt. % to 34.5 wt. % of the second polymer. and 0.5 wt. % to 25 wt. % of the wax. In some aspects, the coating composition can contain 10 wt. % to 30 wt. % of the second polymer, 70 wt. % to 90 wt. % of the PBSA, and 0 wt. % to 10 wt. % of the wax.

In some aspects, the coating composition can be in the form of a film or a sheet. The film or sheet can contain one or more layers. In some instances, the PBSA and the second polymer can be contained in one or more polymer coating layers and the wax can be contained in a wax coating layer. The one or more polymer coating layers can independently contain PBSA and/or the second polymer, e.g., the one or more polymer coating layers can independently contain PBSA; PLA; PBS; PBSA and PLA; PBSA and PBS; PLA and PBS; or PBSA, PLA, and PBS.

In some aspects, the coating composition can contain a first polymer coating layer and at least a second polymer coating layer, wherein the first polymer coating layer and the second polymer coating layer can be different, and can independently contain PBSA and/or the second polymer. The coating composition can contain the polymers, e.g., PBSA, PLA, and/or PBS at any suitable order, and the polymers e.g., PBSA, PLA, and/or PBS can be in one or more than one polymer coating layers. The wt. % of a polymer e.g., PBSA, PLA, and/or PBS in a polymer coating layer can be the same and/or vary between the different polymer coating layers. The wax can be alpha-olefin wax, paraffin wax, or natural wax, or combination thereof. In some aspects, the coating composition can be included in a composition as a coating material. One aspect is directed to a composition containing a material at least partially coated with the coating composition. The coating composition and/or the one or more polymer coating layers of the coating composition can be degraded at least 90%, or at least 95 %, or at least 99%, or at least 99.9 % by weight, or fully in soil under ambient condition within 2 years into carbon dioxide and water, as measured using ASTM D5988-96.

In some aspects, the PLA used herein e.g., in the coat of the fertilizer granule and the coating composition, can have a weight average molecular weight (Mw) of 100 kg/mol to 200 kg/mol. In some aspects, the PBS used herein e.g., in the coat of the fertilizer granule and the coating composition, has a weight average molecular weight (Mw) of 20 kg/mol to 500 kg/mol. In some aspects, the PBSA used herein e.g., in the coat of the fertilizer granule and the coating composition, has a weight average molecular weight (Mw) of 20 kg/mol to 500 kg/mol. The Mw of the polymers can be measured by gel permeation chromatography (GPC).

In the context of the present invention, fertilizer granules and/or fertilizer blend granules may also be referred to as a particle, granule, fertilizer particle, prill, or fertilizer prill.

The term "fertilizer" is defined as a material applied to soils or to plant tissues to supply one or more plant nutrients essential or beneficial to the growth of plants and/or stimulants or enhancers to increase or enhance plant growth. Examples of fertilizers include materials having one or more of urea, ammonium nitrate, calcium ammonium nitrate, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, biostimulants, urease inhibitors, and nitrification inhibitors. In some particular instances, the fertilizer is urea, such as urea granules or prills.

The term "granule" can include a solid material. A granule can have a variety of different shapes, examples of which include a spherical, a puck, an oval, a rod, an oblong, or a random shape.

The term "particle" can include a solid material less than a millimeter in its largest dimension.

The terms "particulate" or "powder" can include a plurality of particles.

The terms "aqueous based," "aqueous base," "water based," and "water base" are defined as containing water or was previously contained in water before drying.

The terms "about" or "approximately" as used herein are defined as being close to, as understood by one of ordinary skill in the art. In one non-limiting embodiment, the terms are defined to be within 10%, preferably within 5%, more preferably within 1%, and most preferably within 0.5%.

The terms "wt. %," "vol.%," or "mol.%" refers to a weight, volume, or molar percentage of a component, respectively, based on the total weight, the total volume of material, or total moles, that includes the component. In a example, 10 grams of component in 100 grams of the material is 10 wt. % of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The phrase "and/or" can include "and" or "or." To illustrate, A, B, and/or C can include: A alone, B alone, C alone, a combination of A and B, a combination of A and C, a combination of B and C, or a combination of A, B, and C.

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

Other objects, features and advantages of the present invention will become apparent from the following figures, detailed description, and examples. It should be understood, however, that the figures, detailed description, and examples, while indicating specific embodiments of the invention, are given by way of illustration only.

### BRIEF DESCRIPTION OF THE DRAWINGS

Advantages of the present invention may become apparent to those skilled in the art with the benefit of the following detailed description and upon reference to the accompanying drawings. Specific embodiments thereof are shown by way of example in the drawings. The drawings may not be to scale.

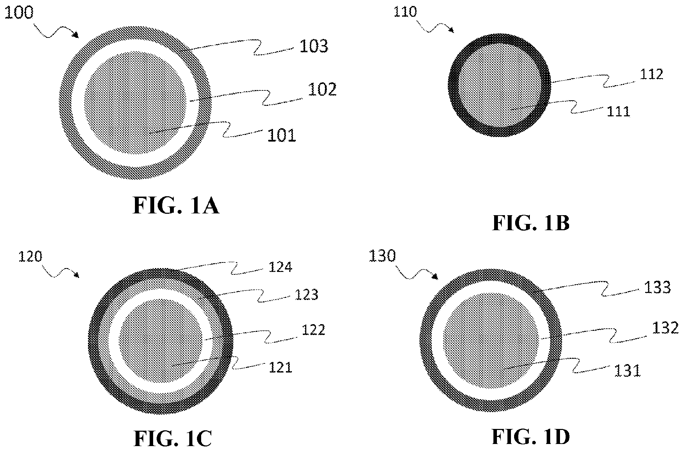

**FIGS. 1A-1D** Fertilizer granules according to four examples of the present invention containing, **FIG. 1A**) a core, a polymer coating layer containing PBSA and the second polymer, and a wax coating layer containing wax, **FIG. 1B**) a core, a polymer coating layer containing PBSA and the second polymer, **FIG. 1C**) a core, a first polymer coating layer containing PBSA, a second polymer coating layer containing the second polymer, and a wax coating layer containing wax, and **FIG. 1D**) a core, a first polymer coating layer containing PBSA, a second polymer coating layer containing the second polymer.

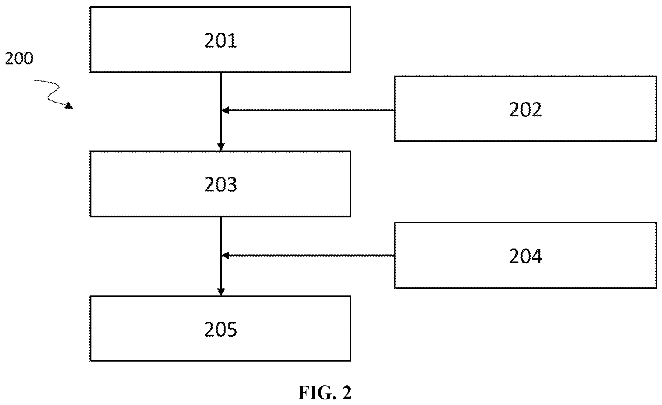

**FIG. 2** illustrates a flowchart of a method for producing a fertilizer granule.

### DETAILED DESCRIPTION OF THE INVENTION

The fertilizer granule of the present invention contains a core containing a plant nutrient and a coat containing particular amounts of PBSA, a second polymer selected from poly lactic acid (PLA) and/or poly butylene succinate (PBS), and optionally a wax, the coat forming a coating on an outer surface of the core.

The aspects of the present invention are discussed in further detail in the following sections.

### A. Fertilizer Granules

The fertilizer granule contains a core and a coat forming a coating on the core. The fertilizer granule can contain 85 wt. % to 98 wt. % or at least any one of, equal to any one of, or between any two of 85, 86, 88, 90, 92, 94, 96, and 98 wt. % of the core e.g., 85 wt. % to 98 wt. % of the fertilizer granule can be comprised of the core.

The core contains a plant nutrient. The plant nutrient of the core can contain nitrogen (N), phosphorus (P), and/or potassium (K) containing fertilizers, or any combination thereof. In some aspects, the plant nutrient can further contain a micronutrient and/or a secondary nutrient.

The nitrogen (N), phosphorus (P), and/or potassium (K) containing fertilizers; and micronutrient and/or secondary nutrient; and the urease inhibitor and/or nitrification inhibitor can be included or excluded in the core of the fertilizer granules. The content of the core of the fertilizer granules can depend on the particular needs of certain types of plant, soil, climate, or other growing conditions to maximize the efficacy of the fertilizer granule in enhancing plant growth and/or crop yield. In some aspects, the nitrogen (N), phosphorus (P), and/or potassium (K) containing fertilizers can include urea, ammonium nitrate, ammonium sulfate, diammonium phosphate (DAP), monoammonium phosphate (MAP), urea-formaldehyde, ammonium chloride, monopotassium phosphate (MKP), triple super phosphate (TSP), rock phosphate, single super phosphate (SSP), muriate of potash (MOP), and potassium nitrate. The micronutrient can be a botanically acceptable form of an inorganic or organometallic compound such as boron, copper, iron, chloride, manganese, molybdenum, nickel, or zinc. The secondary nutrient can be a substance that can deliver calcium, magnesium, and/or sulfur to a plant. In some aspects, the secondary nutrients may include lime, gypsum, superphosphate, or a combination thereof. In some particular aspects, the plant nutrient contains urea.

The core can optionally include a urease inhibitor and/or a nitrification inhibitor. In some aspects, the urease inhibitor can be a thiophosphoric triamide derivative, such as N-(n-butyl) thiophosphoric triamide (NBPT). In some aspects, the nitrification inhibitor can be 3,4-dimethylpyrazole phosphate (DMPP), thio-urea (TU), dicyandiamide (DCD), 2-Chloro-6-(trichloromethyl)-pyridine (Nitrapyrin), 5- Ethoxy-3-trichloromethyl -1, 2, 4-thiadiazol (Terrazole), 2-Amino-4-chloro-6-methyl- pyrimidine (AM), 2-Mercapto-benzothiazole (MBT), or 2-Sulfanimalamidothiazole (ST), or any combination thereof, preferably DCD.

The core of the fertilizer granules can have desirable physical properties such as desired levels of abrasion resistance, granule strength, pelletizability, hygroscopicity, granule shape, and size distribution, which are important properties for the fertilizer core.

The core can be of any suitable shape. Shape includes spherical, cuboidal, cylindrical, puck shape, oval, and oblong shapes. Cores of other shapes can readily be made. In some aspects, the core can be of cylindrical shape with a circular, elliptical, ovular, triangular, square, rectangular, pentagonal, or hexagonal cross section, although a cylindrical shaped core having a cross-section of other shapes can also be made. In some aspects, the core can have a dimension such as length, width, height, and/or cross-sectional diameter between 1 mm to 5 mm or at least any one of, equal to any one of, or between any two of 1 mm, 1.5 mm, 2 mm, 2.5 mm, 3 mm, 3.5 mm, 4 mm, 4.5 mm, and 5 mm.

The fertilizer granule can contain 2 wt.% to 15 wt. % or at least any one of, equal to any one of, or between any two of 2, 4, 6, 8, 10, 12, 14, and 15 wt. % of the coat, e.g., 2 wt.% to 15 wt. % of the fertilizer granule can be comprised of the coat. The coat contains i) 55 wt. % to 90 wt. %, preferably, 65 wt. % to 90 wt. %, or 65 wt. % to 89.5 wt. %, or 70 wt. % to 90 wt. %, or 70 wt. % to 89. 5 % or at least any one of, equal to any one of, or between any two of 55, 56, 57, 58, 59, 60, 61, 62, 63, 64, 65, 66, 67, 68, 69, 70, 71, 72, 73, 74, 75, 76, 77, 78, 79, 79.5, 80, 81, 82, 83, 84, 85, 86, 87, 88, 89, 89.5, and 90 wt. % of the PBSA, ii) 10 wt. % to 45 wt. %, preferably, 10 wt. % to 35 wt. %, or 10 wt. % to 34.5 wt. %, or 10 wt. % to 30 wt. %, or 10 wt. % to 29.5 wt. %, or 19.5 wt. % to 30 wt. %, or at least any one of, equal to any one of, or between any two of 10, 11, 12, 13, 14, 15, 16, 17, 18, 19, 19.5, 20, 21, 22, 23, 24, 25, 26, 27, 28, 29, 29.5, 30, 31, 32, 33, 34, 34.5 35, 36, 37, 38, 39, 40, 41, 42, 43, 44, and 45 wt. % of the second polymer, and iii) 0 wt. % to 30 wt. %, preferably, 0.5 wt. % to 30 wt. %, or 0 wt. % to 25 wt. %, or 0.5 wt. % to 25 wt. %, or 0 wt. % to 20 wt. %, or 0.5 wt. % to 20 wt. %, or 0 wt. % to 10 wt. %, or 0.5 wt. % to 10 wt. %, at least any one of, equal to any one of, or between any two of 0, 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, and 30 wt. % of the wax based on the total weight of the coat. The second polymer is PLA, PBS, or a combination or blend thereof. The wax can be alpha-olefin wax, paraffin wax, or natural wax, or combination thereof.

The PBSA and the second polymer can be contained in one or more polymer coating layers and the wax can be contained in a wax coating layer, wherein the one or more polymer coating layers are at least partially positioned between the core and the wax coating layer. In some aspects, the wax coating layer can form an outer coating layer of the fertilizer granule. The one or more polymer coating layers and the wax coating layer can form separate coating layers. The one or more polymer coating layers and the optional wax coating layer can form the coat of the fertilizer granule.

The one or more polymer coating layers can independently contain PBSA and/or the second polymer, e.g., the one or more polymer coating layers can independently contain PBSA; PLA; PBS; PBSA and PLA; PBSA and PBS; PLA and PBS; or PBSA, PLA, and PBS. In some aspects, the core can be coated with a first polymer coating layer and at least a second polymer coating layer, wherein the first polymer coating layer and the second polymer coating layer are different, and can independently contain PBSA and/or the second polymer. In some aspects, the fertilizer granule can contain a polymer coating layer containing PBSA, PLA, and PBS. In some aspects, the fertilizer granule can contain a polymer coating layer containing PBSA and PLA. In some aspects, the fertilizer granule can contain a polymer coating layer containing PBSA and PBS. In some aspects, the fertilizer granule can contain a polymer coating layer containing PLA and PBS The fertilizer granule contains a polymer coating layer containing PBSA. In some aspects, the fertilizer granule can contain a polymer coating layer containing PBS. In some aspects, the fertilizer granule can contain a polymer coating layer containing PLA. In some aspects, the fertilizer granule can contain one polymer coating layer containing PBSA and another polymer coating layer containing PLA. In some aspects, the fertilizer granule can contain one polymer coating layer containing PBSA and another polymer coating layer containing PBS. In some aspects, the fertilizer granule can contain one polymer coating layer containing PBSA and another polymer coating layer containing PBS and PLA. In some aspects, the fertilizer granule can contain one polymer coating layer containing PBSA and PBS and another polymer coating layer containing PLA. In some aspects, the fertilizer granule can contain one polymer coating layer containing PBSA and PLA and another polymer coating layer containing PBS. In some aspects, the fertilizer granule can contain one polymer coating layer containing PBSA and another polymer coating layer containing PLA and still another polymer coating layer containing PBS. The coat can contain the polymers, e.g., PBSA, PLA, and/or PBS at any suitable order over the core, and the polymers e.g., PBSA, PLA, and/or PBS can be included in one or more than one polymer coating layers. In some instances, the wt. % of a polymer e.g., of PBSA, PLA, and/or PBS independently, in a polymer coating layer can be the same and/or vary in different polymer coating layers, provided that the total wt. % of the polymers in the coat is as defined above.

The one or more polymer coating layers can form a coating over at least a portion of an outer surface of the core to form a polymer coated core. In some aspects, the one or more polymer coating layers can form a relatively uniform coating layer over the core. In some instances, the wax coating layer can form a coating over at least a portion of an outer surface of the polymer coated core to form the fertilizer granule. At least a portion of the one or more polymer coating layers can be positioned between the core and the wax coating layer. In some aspects, the wax coating layer can form a relatively uniform coating layer over the polymer coated core. In some aspects, the wax coating layer can form an outer coating layer of the fertilizer granule.

The one or more polymer coating layers overall can cover or coat 5, 10, 15, 20, 25, 30, 35, 40, 45, 50, 55, 60, 65, 70, 75, 80, 85, 90, 95, 99, or 100 % of the outer surface of the core. The wax coating layer can cover 5, 10, 15, 20, 25, 30, 35, 40, 45, 50, 55, 60, 65, 70, 75, 80, 85, 90, 95, 99, or 100 % of the outer surface of the polymer coated core. The coat overall can cover 5, 10, 15, 20, 25, 30, 35, 40, 45, 50, 55, 60, 65, 70, 75, 80, 85, 90, 95, 99, or 100 % of the outer surface of the core. FIGS. 1A-1D show fertilizer granules according four examples of the present invention. Referring to FIG. 1A, FIG. 1A shows a fertilizer granule **100** according to one example of the present invention, containing a core **101,** a polymer coating layer **102** containing PBSA and the second polymer coating an outer surface of the core, and an wax coating layer **103** containing wax coating an outer surface of the polymer coating layer coated core. The polymer coating layer **102** is represented as covering the entire outer surface of the core **101,** although fertilizer granules with the polymer coating layer **102** covering a portion of the outer surface of the core can readily be made. The wax coating layer **103** is represented as covering the entire outer surface of the polymer coated core, although fertilizer granules with wax coating layer **103** covering a portion of the outer surface of the polymer coated core can readily be made.

Referring to FIG. 1B, FIG. 1B shows a fertilizer granule **110** according to another example of the present invention, containing a core **111,** a polymer coating layer **112** containing PBSA and the second polymer coating an outer surface of the core **111.** The polymer coating layer **112** is represented as covering the entire outer surface of the core **111,** although fertilizer granules with the polymer coating layer **112** covering a portion of the outer surface of the core can readily be made.

Referring to FIG. 1C, FIG. 1C shows a fertilizer granule **120** according to another example of the present invention, containing a core **121,** a first polymer coating layer **122** containing PBSA coating an outer surface of the core **121,** a second polymer coating layer **123** containing the second polymer coating an outer surface of the PBSA coated core to form the polymer coated core, and a wax coating layer **124** containing wax coating an outer surface of the polymer coated core. The first polymer coating layer **122** is represented as covering the entire outer surface of the core **121,** although fertilizer granules with the layer **122** covering a portion of the outer surface of the core can readily be made. The second polymer coating layer **123** is represented as covering the entire outer surface of the PBSA coated core, although fertilizer granules with the layer **123** covering a portion of the outer surface of the PBSA coated core can readily be made. The wax coating layer **124** is represented as covering the entire outer surface of the polymer coated core, although fertilizer granules with wax coating layer **124** covering a portion of the outer surface of the polymer coated core can readily be made.

Referring to FIG. 1D, FIG. 1D shows a fertilizer granule **130** according to another example of the present invention, containing a core **131,** a first polymer coating layer **132** containing PBSA coating an outer surface of the core **131,** and a second polymer coating layer **133** containing the second polymer coating an outer surface of the PBSA coated core. The first polymer coating layer **132** is represented as covering the entire outer surface of the core **131,** although fertilizer granules with the layer **132** covering a portion of the outer surface of the core can readily be made. The second polymer coating layer **133** is represented as covering the entire outer surface of the PBSA coated core, although fertilizer granules with the layer **133** covering a portion of the outer surface of the PBSA coated core can readily be made.

Fertilizer granules containing the polymers, e.g. PBSA, PLA, and PBS, in other configuration can readily be made

The coating of the fertilizer granule of the present invention allows for controlled release of the fertilizers from the core. The coat and/or the one or more polymer coating layers of the coat can degrade at least 90%, or at least 95 %, or at least 99% or at least 99.9 % by weight, or fully in soil under ambient condition within 2 years into carbon dioxide and water, as measured in accordance with ASTM D5988-96.

The core and/or coat can contain a filler, binder, and/or pH buffer. In some aspects, the core and/or coat, based on total weight of the core and/or coat respectively, contains less than 0.5 wt. %, or less than 0.1 wt. %, or is substantially free of a filler such as each of silica, dried distillers grains with solubles (DDGS), CaCO₃, MgO, CaO, bone mill powder, and rice husk. In some aspects, the core and/or coat based on total weight of the core and/or coat respectively contains less than 0.5 wt. %, or less than 0.1 wt. %, or is substantially free of a binder such as each of plaster of paris, flour, chalk powder, bleached wheat flour, starch, gluten, kaolin, bentonite, and colloidal silica. In some aspects, core and/or coat based on total weight of the core and/or coat respectively contains less than 0.5 wt. %, or less than 0.1 wt. %, or is substantially free of a pH buffer such as CaCO₃, Na₂CO₃, K₂CO₃, MgO, KH₂PO₄, NaHCO₃, and/or MgCO₃.

The fertilizer granules described herein can be comprised in a composition useful for application to soil. In addition to the fertilizer granules, the composition may include other fertilizer compounds, micronutrients, primary nutrients, secondary nutrients, additional urea, additional nitrogen nutrients, additional phosphorus nutrients, additional potassium nutrients insecticides, herbicides, or fungicides, or combinations thereof.

The fertilizer granules described herein can also be included in a blended composition comprising other fertilizer granules. The other fertilizer granules can be granules of urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

### B. Method of Making a Fertilizer Granule

A method for making a fertilizer granule is also described which can include providing or forming a core containing a plant nutrient, contacting and coating at least a portion of an outer surface of the core with one or more solutions containing independently PBSA and/or the second polymer, e.g., PBSA; PLA; PBS; PBSA and PLA; PBSA and PBS; PLA and PBS; or PBSA, PLA, and PBS, to form a polymer coated core, wherein the polymer coated core contains the core coated with PBSA and the second polymer; and optionally coating the polymer coated core with wax. The polymer coated core can contain the one or more polymer coating layers and a core coated with PBSA and the second polymer. The coat can be coated with solutions containing PBSA, PLA, and/or PBS at any suitable order to form the polymer coated core. If the core is coated with more than one solutions containing independently PBSA and/or the second polymer, the solutions can be contacted with core simultaneously or at any suitable order. The core can be coated with the one or more solutions by spraying the one or more solutions on the core. The one or more solutions containing PBSA and the second polymer can independently be heated during spraying of the solutions. The heated solutions can have a temperature of 30 to 150°C or at least any one of, equal to any one of, or between any two of 30, 40, 50, 60, 70, 80, 90, 100, 110, 120, 130, 140, and 150 °C. The polymer coated core can be coated with wax by coating the polymer coated core in a drum with melted wax via drop casting. The wax melt can have temperature of 50 to 120 °C or at least any one of, equal to any one of, or between any two of 50, 60, 70, 80, 90, 100, 110, and 120 °C.

The wt. % of a polymer, e.g., PBSA, PLA, and/or PBS, in a solution can be the same and/or vary between the different solutions. The solutions can independently contain suitable solvents such as organic solvent(s) including chlorinated organic solvents such as methylene chloride, chloroform, etc.; aromatics solvents such as toluene, xylene, etc.; acetonitrile; or any combination thereof.

FIG. 2 shows a flow chart of a method **200** for making a fertilizer granule according to an example of the present invention. Referring to FIG. 2, a core **201** containing a plant fertilizer can be coated with one or more solutions **202** containing independently PBSA and/or the second polymer to form a polymer coated core **203,** the polymer coated core 203 can be coated with wax **204** to form the fertilizer granule **205.**

A core in a form of prills, granules, and/or an extrudate, of size 1 mm to 5 mm can be provided in a container, such as a drum coater. One or more solutions containing independently PBSA and/or the second polymer can be sprayed on the granules in the container to form the polymer coated core. The one or more solutions independently can have or can be heated to a temperature of 30 to 150 °C or at least any one of, equal to any one of, or between any two of 30, 40, 50, 60, 70, 80, 90, 100, 110, 120, 130, 140, and 150 °C.. The polymer coated core in the container can be drop casted with melted wax to form the fertilizer granule. The wax melt can have temperature of 50 to 120°C or at least any one of, equal to any one of, or between any two of 50, 60, 70, 80, 90, 100, 110, and 120 °C.

The core can be a prill or formed by granulating, pelletizing, compacting, and/or extruding a composition containing the core ingredients such as nitrogen (N), phosphorus (P), and/or potassium (K) containing fertilizers. The core can optionally contain micronutrients, secondary nutrients, urease inhibitors, and/or nitrification inhibitors.

The coating can be pre-formed, such as a powder blend, sheet, solution, and/or melt, containing the PBSA, the second polymer, and/or optionally the wax. In some instances, the core can be coated with the pre-formed coating. The pre-formed coating can include the PBSA and the second polymer, the core can be coated with the pre-formed coating to form a polymer coated core and the polymer coated core can be optionally coated with wax to form the fertilizer granule.

### C. Methods of Using Fertilizer Granules

The fertilizer granule(s) of the present invention can be used in methods of increasing the amount of nitrogen (N), phosphorus (P), and/or potassium (K) containing fertilizers; micronutrients; and/or secondary nutrient in soil and of enhancing plant growth. Such methods can include applying to the soil an effective amount of a composition comprising the fertilizer granule(s) of the present invention. The method may include increasing the growth and yield of crops, trees, ornamentals, etc. such as, for example, palm, coconut, rice, wheat, corn, barley, oats, and soybeans. The method can include applying the fertilizer granules of the present invention to at least one of a soil, an organism, a liquid carrier, a liquid solvent, etc.

Examples of plants that can benefit from the fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

### D. Coating composition

The coating composition contains i) 55 wt. % to 90 wt. %, preferably, 65 wt. % to 90 wt. %, or 65 wt. % to 89.5 wt. %, or 70 wt. % to 90 wt. %, or 70 wt. % to 89.5 %, or at least any one of, equal to any one of, or between any two of 55, 56, 57, 58, 59, 60, 61, 62, 63, 64, 65, 66, 67, 68, 69, 70, 71, 72, 73, 74, 75, 76, 77, 78, 79, 79.5, 80, 81, 82, 83, 84, 85, 86, 87, 88, 89, 89.5, and 90 wt. % of the PBSA, ii) 10 wt. % to 45 wt. %, preferably, 10 wt. % to 35 wt. %, or 10 wt. % to 34.5 wt. %, or 10 wt. % to 30 wt. %, or 10 wt. % to 29.5 wt. %, or 19.5 wt. % to 30 wt. %, or at least any one of, equal to any one of, or between any two of 10, 11, 12, 13, 14, 15, 16, 17, 18, 19, 20, 21, 22, 23, 24, 25, 26, 27, 28, 29, 29.5, 30, 31, 32, 33, 34, 34.5 35, 36, 37, 38, 39, 40, 41, 42, 43, 44, and 45 wt. % of the second polymer or mixtures thereof, and iii) 0 wt. % to 30 wt. %, preferably, 0.5 wt. % to 30 wt. %, or 0 wt. % to 25 wt. %, or 0.5 wt. % to 25 wt. %, or 0 wt. % to 20 wt. %, or 0.5 wt. % to 20 wt. %, or 0 wt. % to 10 wt. %, or 0.5 wt. % to 10 wt. %, at least any one of, equal to any one of, or between any two of 0, 0.5, 1, 2, 3, 4, 5, 6, 7, 8, 9, 10, 11, 12, 13, 14, 15, 16, 17, 18, 19, 19.5, 20, 21, 22, 23, 24, 25, 26, 27, 28, 29, and 30 wt. % of the wax based on the total weight of the coat. The second polymer is PLA, PBS, or a combination or blend thereof.

The coating composition can include one or more polymer coating layers and optionally a wax coating layer. The PBSA and the second polymer can be contained in the one or more polymer coating layers and the optional wax can be contained in the optional wax coating layer. In some aspects, the wax coating layer can form an outer coating layer of the coating composition. The one or more polymer coating layers and the wax coating layer can form separate coating layers. The wax can be alpha-olefin wax, paraffin wax, or natural wax, or combination thereof.

The one or more polymer coating layers can independently contain PBSA and/or the second polymer, e.g., the one or more polymer coating layers can independently contain PBSA; PLA; PBS; PBSA and PLA; PBSA and PBS; PLA and PBS; or PBSA, PLA, and PBS. In some aspects, the coating composition can include a first polymer coating layer and at least a second polymer coating layer, wherein the first polymer coating layer and the second polymer coating layer can be different, and can independently contain PBSA and/or the second polymer. In some aspects, the coating composition can contain a polymer coating layer containing PBSA, PLA, and PBS. In some aspects, the coating composition can contain a polymer coating layer containing PBSA and PLA. In some aspects, the coating composition can contain a polymer coating layer containing PBSA and PBS. In some aspects, the coating composition can contain a polymer coating layer containing PLA and PBS. In some aspects, the coating composition can contain a polymer coating layer containing PBSA. In some aspects, the coating composition can contain a polymer coating layer containing PBS. In some aspects, the coating composition can contain a polymer coating layer containing PLA. In some aspects, the coating composition can contain one polymer coating layer containing PBSA and another polymer coating layer containing PLA. In some aspects, the coating composition can contain one polymer coating layer containing PBSA and another polymer coating layer containing PBS. In some aspects, the coating composition can contain one polymer coating layer containing PBSA and another polymer coating layer containing PBS and PLA. In some aspects, the coating composition can contain one polymer coating layer containing PBSA and PBS and another polymer coating layer containing PLA. In some aspects, the coating composition can contain one polymer coating layer containing PBSA and PLA and another polymer coating layer containing PBS. In some aspects, the coating composition can contain one polymer coating layer containing PBSA, and another polymer coating layer containing PLA, and still another polymer coating layer containing PBS. The coating composition can contain the polymers, e.g., PBSA, PLA, and/or PBS at any suitable order, and the polymers, e.g., PBSA, PLA, and/or PBS can be included in one or more than one polymer coating layers. The wt. % of a polymer e.g., of PBSA, PLA, and/or PBS independently, in a polymer coating layer can be the same and/or vary in different polymer coating, provided that the total wt. % of the polymers in the coating composition is as defined above.

The coating composition and/or the one or more polymer coating layers of the coating composition can be degraded at least 90%, or at least 95 %, or at least 99% or at least 99.9 % by weight, or fully in soil under ambient condition in 2 years into carbon dioxide and water, as measured using ASTM D5988-96.

### EXAMPLES

The present invention will be described in greater detail by way of specific examples. The following examples are offered for illustrative purposes only. Those of skill in the art will readily recognize a variety of noncritical parameters which can be changed or modified to yield essentially the same results.

### Example 1

### Fertilizer Granule

Urea granules were coated with coating compositions containing PBSA and PLA in three experiments. In experiment 1 and 2, urea granules of size 1 mm to 5 mm were coated with a bi-layer coating containing PBSA and PLA. Each of the 2 layers of the bi-layer coating contained PBSA and PLA, but the wt. % of the polymers were varied independently between the layers, where the wt.% of PLA in the inner layer (e.g. directly over the core) was higher compared to that in the outer layer. The outer layer was also twice as thick compared to the inner layer. The bi-layer coating in total contained 90 wt. % of PBSA and 10 wt. % of PLA. In experiment 1, on average about 2 wt. % of each of the fertilizer granules were comprised of the bi-layer coat. In experiment 2, on average about 3 wt. % of each of the fertilizer granules were comprised of the bi-layered coat. In experiment 3, urea granules of size 1 mm to 5 mm were coated with a single layer coating containing PBSA and PLA. The coating contained 90 wt. % of PBSA and 10 wt. % of PLA. In experiment 3, on average about 3 wt. % of each of the fertilizer granules were comprised of the single layered coat.

The fertilizer granules were kept in water for 24 hours at 20 °C and the amount urea released from the core after 24 hours was measured. The wt. % of urea released for experiments 1 - 3 are shown in Table 1. Comparison of urea release between experiments 1 and 2 shows increasing coating wt. % in the fertilizer granules decreases urea release from the core (46.48 wt. % vs. 12.09 wt. % respectively). Comparison of urea release between experiment 3 and 2 shows, a bi-layer coating can decrease urea release from the core compared to a single layer coating (16.81 wt. % vs, 12.09 wt. % respectively).

**Table 1: Coated Fertilizer granules**

| | Coating formulation | Average coat wt. % in the fertilizer granules | 24 hr. water release, 20°C |
|---|---|---|---|
| Experiment 1 | 90 wt. %/10 wt. % | 2 | 46.48% |
| | PBSA/PLA, Bi-Layer | | |
| Experiment 2 | 90 wt. %/10 wt. % | 3 | 12.09% |
| | PBSA/PLA, Bi-Layer | | |
| Experiment 3 | 90 wt. %/10 wt. % | 3 | 16.81% |
| | PBSA/PLA, Single-Layer | | |

## Claims

1. A fertilizer granule comprising:
a core comprising a plant nutrient; and
a coat comprising 55 wt. % to 90 wt. % of a poly butylene succinate adipate (PBSA) and 10 wt. % to 45 wt. % of a second polymer selected from poly lactic acid (PLA), poly butylene succinate (PBS), or a combination or blend of PLA and PBS, and 0 wt. % to 30 wt. % of a wax based on the total weight of the coat, the coat forming a coating on an outer surface of the core.

2. The fertilizer granule of claim 1, wherein the coat comprises 65 wt. % to 90 wt. % of PBSA and, 10 wt. % to 35 wt. % of PLA.

3. The fertilizer granule of claim 1, wherein the coat comprises 65 wt. % to 90 wt. % of PBSA and, 10 wt. % to 35 wt. % of PBS.

4. The fertilizer granule of claim 1, wherein the coat comprises 0.5 wt. % to 30 wt. % of the wax.

5. The fertilizer granule of claims 1 to 4, wherein the PBSA and the second polymer is comprised in one or more polymer coating layers and the wax is comprised in a wax coating layer, wherein the one or more polymer coating layers are at least partially located between the core and the wax coating layer.

6. The fertilizer granule of claims 1 to 5, wherein the PBSA and/or the second polymer is comprised in a first polymer coating layer and at least a second polymer coating layer, wherein the first polymer coating layer and the second polymer coating layer are different.

7. The fertilizer granule of claims 1 to 6, wherein the coat comprises a wax and the wax is an alpha-olefin wax, paraffin wax, or natural wax, or combination thereof.

8. The fertilizer granule of claims 1 to 7, wherein the PLA has a weight average molecular weight (Mw) of 100 kg/mol to 200 kg/mol, the PBS has a weight average molecular weight (Mw) of 20 kg/mol to 500 kg/mol, and/or the PBSA has a weight average molecular weight (Mw) of 20 kg/mol to 500 kg/mol, as measured by GPC.

9. The fertilizer granule of claims 1 to 8, wherein the coat comprises 10 wt. % to 30 wt. % of the PLA and/or PBS, 70 wt. % to 90 wt. % of the PBSA, and 0 wt. % to 10 wt. % of the wax.

10. The fertilizer granule of claims 1 to 9, wherein the coat has a thickness of 10 µm to 100 µm over the core.

11. The fertilizer granule of claims 1 to 10, wherein the plant nutrient comprises nitrogen (N), phosphorus (P), or potassium (K) or any combination thereof.

12. The fertilizer granule of claims 1 to 11, wherein the plant nutrient comprises urea.

13. The fertilizer granule of claims 1 to 12, wherein the fertilizer granule comprises 85 wt. % to 98 wt. % of the core and 2 wt. % to 15 wt. % of the coat.

## Patentansprüche

1. Düngemittelgranulat, umfassend:
einen Kern, der einen Pflanzennährstoff umfasst; und
einen Überzug, der 55 Gew.-% bis 90 Gew.-% eines Polybutylensuccinatadipats (PBSA) und 10 Gew.-% bis 45 Gew.-% eines zweiten Polymers, ausgewählt aus Polymilchsäure (PLA), Polybutylensuccinat (PBS) oder einer Kombination oder Mischung aus PLA und PBS, und 0 Gew.-% bis 30 Gew. % eines Wachses auf Grundlage des Gesamtgewichts der Beschichtung umfasst, wobei der Überzug eine Beschichtung auf einer äußeren Oberfläche des Kerns ausbildet.

2. Düngemittelgranulat nach Anspruch 1, wobei der Überzug 65 Gew.-% bis 90 Gew.-% PBSA und 10 Gew.-% bis 35 Gew.-% PLA umfasst.

3. Düngemittelgranulat nach Anspruch 1, wobei der Überzug 65 Gew.-% bis 90 Gew.-% PBSA und 10 Gew.-% bis 35 Gew.-% PBS umfasst.

4. Düngemittelgranulat nach Anspruch 1, wobei der Überzug 0,5 Gew.-% bis 30 Gew.-% des Wachses umfasst.

5. Düngemittelgranulat nach den Ansprüchen 1 bis 4, wobei das PBSA und das zweite Polymer in einer oder mehreren Polymerbeschichtungsschichten enthalten sind und das Wachs in einer Wachsbeschichtungsschicht enthalten ist, wobei sich die eine oder die mehreren Polymerbeschichtungsschichten wenigstens teilweise zwischen dem Kern und der Wachsbeschichtungsschicht befinden.

6. Düngemittelgranulat nach den Ansprüchen 1 bis 5, wobei das PBSA und/oder das zweite Polymer in einer ersten Polymerbeschichtungsschicht und wenigstens einer zweiten Polymerbeschichtungsschicht enthalten ist, wobei die erste Polymerbeschichtungsschicht und die zweite Polymerbeschichtungsschicht unterschiedlich sind.

7. Düngemittelgranulat nach den Ansprüchen 1 bis 6, wobei die Beschichtung ein Wachs umfasst und das Wachs ein Alpha-Olefinwachs, Paraffinwachs oder Naturwachs oder eine Kombination davon ist.

8. Düngemittelgranulat nach den Ansprüchen 1 bis 7, wobei das PLA ein gewichtsmittleres Molekulargewicht (Mw) von 100 kg/mol bis 200 kg/mol aufweist, das PBS ein gewichtsmittleres Molekulargewicht (Mw) von 20 kg/mol bis 500 kg/mol aufweist und/oder das PBSA ein gewichtsmittleres Molekulargewicht (Mw) von 20 kg/mol bis 500 kg/mol, gemessen mittels GPC, aufweist.

9. Düngemittelgranulat nach den Ansprüchen 1 bis 8, wobei der Überzug 10 Gew.-% bis 30 Gew.-% des PLA und/oder PBS, 70 Gew.-% bis 90 Gew.-% des PBSA und 0 Gew.-% bis 10 Gew.-% des Wachses umfasst.

10. Düngemittelgranulat nach den Ansprüchen 1 bis 9, wobei der Überzug eine Dicke von 10 µm bis 100 µm über dem Kern aufweist.

11. Düngemittelgranulat nach den Ansprüchen 1 bis 10, wobei der Pflanzennährstoff Stickstoff (N), Phosphor (P) oder Kalium (K) oder eine beliebige Kombination davon umfasst.

12. Düngemittelgranulat nach den Ansprüchen 1 bis 11, wobei der Pflanzennährstoff Harnstoff umfasst.

13. Düngemittelgranulat nach den Ansprüchen 1 bis 12, wobei das Düngemittelgranulat 85 Gew.-% bis 98 Gew.-% des Kerns und 2 Gew.-% bis 15 Gew.-% des Überzugs umfasst.

## Revendications

1. Granulé d'engrais comprenant :
un noyau comprenant un nutriment pour plante ; et
une enveloppe comprenant 55 % en poids à 90 % en poids de polysuccinate adipate de butylène (PBSA) et 10 % en poids à 45 % en poids d'un deuxième polymère choisi parmi le polyacide lactique (PLA), le polysuccinate de butylène (PBS), ou une combinaison ou un mélange de PLA et de PBS, et 0 % en poids à 30 % en poids d'une cire sur la base du poids total de l'enveloppe, l'enveloppe formant un enrobage sur une surface extérieure du noyau.

2. Granulé d'engrais selon la revendication 1, dans lequel l'enveloppe comprend 65 % en poids à 90 % en poids de PBSA et 10 % en poids à 35 % en poids de PLA.

3. Granulé d'engrais selon la revendication 1, dans lequel l'enveloppe comprend 65 % en poids à 90 % en poids de PBSA et 10 % en poids à 35 % en poids de PBS.

4. Granulé d'engrais selon la revendication 1, dans lequel l'enveloppe comprend 0,5 % en poids à 30 % en poids de la cire.

5. Granulé d'engrais selon les revendications 1 à 4, dans lequel le PBSA et le deuxième polymère sont compris dans au moins une couche d'enrobage de polymère et la cire est comprise dans une couche d'enrobage de cire, dans lequel l'au moins une couche d'enrobage de polymère est située au moins partiellement entre le noyau et la couche d'enrobage de cire.

6. Granulé d'engrais selon les revendications 1 à 5, dans lequel le PBSA et/ou le deuxième polymère sont compris dans une première couche d'enrobage de polymère et au moins une deuxième couche d'enrobage de polymère, dans lequel la première couche d'enrobage de polymère et la deuxième couche d'enrobage de polymère sont différentes.

7. Granulé d'engrais selon les revendications 1 à 6, dans lequel l'enveloppe comprend une cire et la cire est une cire d'alpha-oléphine, une cire de paraffine, ou une cire naturelle, ou des combinaisons de celles-ci.

8. Granulé d'engrais selon les revendications 1 à 7, dans lequel le PLA a un poids moléculaire moyen en poids (Mw) de 100 kg/mol à 200 kg/mol, le PBS a un poids moléculaire moyen en poids de 20 kg/mol à 500 kg/mol, et/ou le PBSA a un poids moléculaire moyen en poids de 20 kg/mol à 500 kg/mol, tel que mesuré par GPC.

9. Granulé d'engrais selon les revendications 1 à 8, dans lequel l'enveloppe comprend 10 % en poids à 30 % en poids du PLA et/ou du PBS, 70 % en poids à 90 % en poids du PBSA, et 0 % en poids à 10 % en poids de la cire.

10. Granulé d'engrais selon les revendications 1 à 9, dans lequel l'enveloppe a une épaisseur de 10 µm à 100 µm sur le noyau.

11. Granulé d'engrais selon les revendications 1 à 10, dans lequel le nutriment pour plante contient de l'azote (N), du phosphore (P), ou du potassium (K) ou toute combinaison de ceux-ci.

12. Granulé d'engrais selon les revendications 1 à 11, dans lequel le nutriment pour plante contient de l'urée.

13. Granulé d'engrais selon les revendications 1 à 12, dans lequel le granulé d'engrais comprend 85 % en poids à 98 % en poids du noyau et 2 % en poids à 15 % en poids de l'enveloppe.
